# FASCICULE DE BREVET EUROPEEN

(11) **EP 4 259 746 B1**
(45) Date de publication et mention de la délivrance du brevet: **12.02.2025**
(21) Numéro de dépôt: 21835294.6
(22) Date de dépôt: 13.12.2021
(51) Int. Cl.: C09K 17/18, A01G 25/00

(54) **AGENT MOUILLANT COMPRENANT UN ESTER DE SORBITANE POLYÉTHOXYLÉ ET AU MOINS UN LIPIDE DE MANNOSYLÉRYTHRITOL**
NETZMITTEL ENTHALTEND EINEN POLYETHOXYLIERTEN SORBITANESTER UND MINDESTENS EIN MANNOSYLERYTHRITOLLIPID
WETTING AGENT COMPRISING A POLYETHOXYLATED SORBITAN ESTER AND AT LEAST ONE MANNOSYLERYTHRITOL LIPID

(30) Priorité: 14.12.2020 FR 2013215
(43) Date de publication de la demande: 18.10.2023
(73) Titulaire: Oleon N.V., 9940 Ertvelde (BE)
(72) Inventeur: DEPREY, Sophie, 60280 MARGNY-LES-COMPIEGNE (FR); HERY, Sylvie, 60880 JAUX (FR); VAN DER WEEËN, Pieter, 9000 GENT (BE)
(74) Mandataire: Santarelli
(86) Numéro de dépôt international: PCT/EP2021/085420
(87) Numéro de publication internationale: WO 2022/128878

(56) Documents cités:
- FR-A1- 3 048 851
- JP-A- 2004 211 382

## Description

### Domaine technique

La présente invention concerne une combinaison comportant un ester de sorbitane polyéthoxylé, au moins un lipide de mannosylérythritol et du monopropylène glycol, son procédé d'obtention et son utilisation en tant qu'agent mouillant pour sol. L'invention concerne également des solutions comprenant une combinaison selon l'invention.

Le réchauffement climatique et les périodes de sécheresse, font que les sols sont de plus en plus en pénurie d'eau et s'assèchent.

Par « sol » on entend la partie supérieure de la croûte terrestre, constituée de matière minérale (sable, argile et/ou limon), de matière organique, d'air et d'eau, où les plantes peuvent pousser.

Les sols inclus les terres agricoles, telles que celles destinées aux cultures fruitières, ornementales, céréalières, potagères et/ou des oléagineux, et les espaces verts tels que les terrains de golfs, les terrains de sports, les jardins et les parcs.

La sécheresse du sol entraine un durcissement du celui-ci et un accroissement de son hydrophobicité, rendant l'absorption d'eau de plus en plus difficile. Des eaux de ruissellement apparaissent pouvant inclure des éléments nutritifs pour les plantes, des insecticides, des fongicides et/ou des herbicides, ce qui non seulement entraîne une perte de productivité accrue des cultures qui ne reçoivent plus les éléments destinés à leur bonne croissance, mais peut également être dangereux pour l'homme et l'environnement si de tels éléments potentiellement toxiques se retrouvent dans des réservoirs d'eau de surface. Par ailleurs, la sécheresse du sol peut engendrer une consommation excessive d'eau pour rétablir une humectation suffisante du sol et éviter des pertes de rendement et/ou la mort des plantes.

Par « plante », on désigne tout membre du règne « Plantae », quel que soit son stade de développement tel que la graine, le bulbe, la plantule ou la plante adulte.

Afin d'éviter ces problèmes, des agents mouillants pour sol sont utilisés dans les eaux d'irrigation, pour favoriser l'absorption de l'eau par le sol.

Les agents mouillants pour sol, facilitent l'absorption d'une solution aqueuse dans le sol, en permettant à cette solution de s'étaler et recouvrir les particules solides hydrophobes constituant le sol.

En conséquence, une moindre quantité d'eau est nécessaire pour atteindre une bonne humectation du sol favorable à la croissance des plantes.

### Technique antérieure

La plupart des agents mouillants pour sol actuellement sur le marché, sont des polymères à base d'alcool alkoxylé. La fabrication de ces produits pouvant présenter un danger, la présente invention vise à proposer une solution dans laquelle la quantité de produit alkoxylé nécessaire pour obtenir une mouillabilité du sol au moins équivalente au produits existants, est réduite.

JP 2004 211382 décrit des compositions aqueuses d'amélioration du fond de teint contenant: un ester d'acide gras C12-C18 de polyoxyéthylène sorbitan et du propylène glycol.

FR 3 048 851 A1 décrit un concentré comprenant un lipide de mannosylérythritol (MEL); et du monopropylène glycol. Il est utilisé comme agent mouillant pour des cultures et des zones non agricoles telles que des parcs, des jardins, etc.

### Exposé de l'invention

Le travail des inventeurs a permis de mettre en évidence qu'une combinaison d'un ester de sorbitane polyéthoxylé, d'au moins un lipide de mannosylérythritol et d'un solvant, tel que le monopropylène glycol, se dispersait très bien dans l'eau et restait stable à température ambiante tout en augmentant le pouvoir mouillant de l'eau, quand la combinaison était ajoutée à celle-ci, de sorte que son utilisation en tant qu'agent mouillant pour sol serait particulièrement avantageuse. En effet, le sol ayant été mis en contact avec une telle combinaison absorbe plus facilement l'eau, et ce, de façon durable : non seulement le sol mis en contact avec la combinaison selon l'invention est capable d'absorber une plus grande quantité d'eau (au moins 5, préférentiellement au moins 7 fois plus d'eau qu'un sol non mis en contact avec la combinaison selon l'invention), mais le sol est également capable d'absorber une quantité d'eau supérieure lors des au moins 3, préférentiellement au moins 5, plus préférentiellement au moins 9 apports en eau suivant la mise en contact du sol avec la combinaison selon l'invention.

L'invention concerne donc une combinaison comprenant ou consistant en du monolaurate de sorbitane polyéthoxylé (20), au moins 1% en poids d'au moins un lipide de mannosylérythritol, un solvant et optionnellement un acide gras et/ou un ester d'acide gras, dans laquelle la quantité totale de monolaurate de sorbitane polyéthoxylé (20) et de lipide(s) de mannosylérythritol est d'au moins 25% en poids par rapport au poids de la combinaison.

Plus particulièrement, l'invention concerne une combinaison comprenant ou consistant en :
- du monolaurate de sorbitane polyéthoxylé (20);
- au moins 1% en poids d'au moins un lipide de mannosylérythritol ;
- du monopropylène glycol ; et
- optionnellement un acide gras et/ou un ester d'acide gras ;
dans laquelle la quantité totale de monolaurate de sorbitane polyéthoxylé (20) et de lipide(s) de mannosylérythritol est d'au moins 25% en poids ; les pourcentages en poids étant donnés par rapport au poids de la combinaison.

Il est considéré par la présente demande que les termes « consistant en » inclus notamment les sous-produits et impuretés des composés de la combinaison.

Le monolaurate de sorbitane polyéthoxylé (20) est également appelé polysorbate 20 (n°CAS : 9005-64-5). Le nombre « 20 » indique le nombre moyen de moles d'oxyde d'éthylène ayant réagi par mole de sorbitane.

Par « lipide de mannosylérythritol » ou MEL, on entend un tensioactif comportant une partie hydrophile formée par le groupe mannosylérythritol, et une partie hydrophobe formée par au moins un groupe acyle.

Par MEL, on désigne plus particulièrement une molécule présentant la formule générale suivante représentée par la formule chimique 1 : 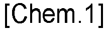 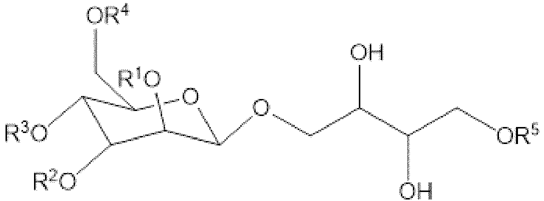 dans laquelle :
- R¹ et R², identiques ou différents, représentent un groupe acyle, comportant une chaine carbonée acyclique insaturée ou saturée,
- R³ et R⁴, identiques ou différents, représentent un groupe acétyle ou un atome d'hydrogène, et
- R⁵ représente un atome d'hydrogène ou un groupe acyle.

Parmi les MELs représentés par la formule chimique 1 décrits ci-avant, on peut distinguer les « MELs di-acylés » des « MELs tri-acylés », selon la nature du groupe présent en R⁵. On notera que selon cette terminologie, les groupements acétyles pouvant être présents en R³ et R⁴ ne sont pas comptabilisés dans les groupements acyles.

Par MEL tri-acylé, on désigne une molécule représentée par la formule chimique 1 dans laquelle R¹, R², R³ et R⁴ sont tels qu'indiqués ci-avant et R⁵ représente un groupe acyle.

Par MEL di-acylé, on désigne une molécule représentée par la formule chimique 1 dans laquelle R¹, R², R³ et R⁴ sont tels qu'indiqués ci-avant et R⁵ représente un atome d'hydrogène.

Un MEL di-acylé est donc représenté par la formule chimique 2 suivante :

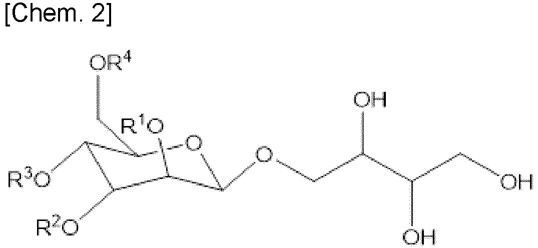

Avantageusement, le au moins un MEL compris dans la combinaison selon l'invention est di-acylé.

Deux stéréoisomères de MEL di-acylé représentés par la formule chimique 2 sont connus et représentés par les formules chimiques 3 et 4 ci-après : 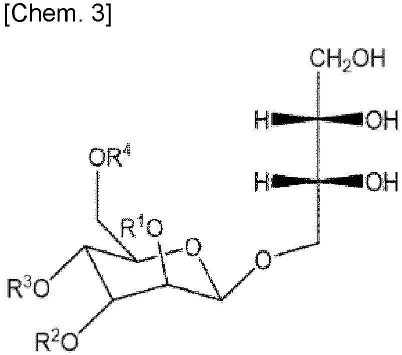 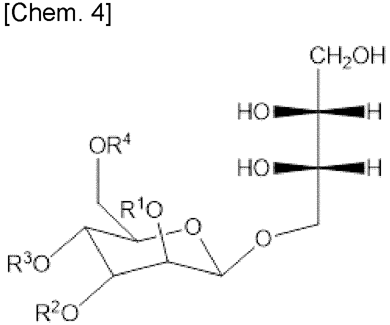 dans lesquelles, R¹, R², R³, R⁴ sont tels qu'indiqués pour la formule chimique 1. Avantageusement, un MEL di-acylé est une molécule représentée par la formule chimique 3.

Les formules chimiques 1 à 4 ci-avant peuvent représenter plusieurs molécules, chaque molécule étant donc un MEL.

Avantageusement, la combinaison selon l'invention comprend au moins deux MELs.

Par « MELs », on désigne au moins deux molécules représentées par les formules chimiques 1, 2, 3 ou 4 différentes de par leur substitution (groupes acyles, acétyles) ou par leur stéréoisomérie, plus particulièrement, au moins deux molécules représentées par la formule chimique 3 différentes.

Par ailleurs, les MELs sont généralement classés en quatre classes de molécules, notées de A à D, selon leur degré d'acétylation en R³ et R⁴. La classe des MELs-A comporte des molécules représentées par la formule chimique 1 présentant deux groupes acétyles en R³ et R⁴. La classe des MELs-B et la classe des MELs-C comportent des molécules représentées par la formule chimique 1 présentant un seul groupe acétyle en R⁴ et R³ respectivement. Enfin, la classe des MELs-D comporte des molécules représentées par la formule chimique 1 ne présentant pas de groupe acétyle (R³= R⁴=H).

Outre de par leur degré d'acétylation, les MELs peuvent varier dans leur structure, de par la nature des groupes acyles issus d'acides gras qui composent leur partie hydrophobe.

Cette variation est généralement fonction du procédé mis en oeuvre pour l'obtention des MELs.

Les MELs sont généralement obtenus par des procédés mettant en oeuvre la culture de champignons, et plus particulièrement de levures. Avantageusement, les MELs visés par la présente demande sont obtenus par un procédé de fermentation, comprenant les étapes suivantes :
- la culture d'une souche de champignon et plus particulièrement d'une souche de levure en présence d'une source de carbone pour obtenir des MELs; et
- la récupération des MELs ainsi obtenus.

Les souches à partir desquelles il est possible d'obtenir des MELs sont bien connues de l'homme du métier. A titre d'exemple, il est connu d'utiliser des souches de la famille des Basidiomycètes, de préférence du genre Pseudozyma, telle que Pseudozyma antarctica, Pseudozyma parantartica, Pseudozyma aphidis, Pseudozyma rugulosa, Pseudozyma graminicola, Pseudozyma siamensis, Pseudozyma hubeiensis, Pseudozyma tsukubaensis, Pseudozyma crassa, ou du genre Ustilago, telle que Ustilago maydis, Ustilago cynodontis et Ustilago scitaminea.

En général, selon la souche, une classe de MELs (MELs-A, MELs-B, MELs-C ou MELs-D), est produite majoritairement, voire exclusivement par rapport aux autres classes de MEL. A titre d'exemple, Pseudozyma antarctica, Pseudozyma aphidis, Pseudozyma rugulosa et Pseudozyma parantarctica produisent en majorité des MELs-A représentés par la formule chimique 3. Pseudozyma graminicola, Pseudozyma siamensis, Pseudozyma hubeiensis produisent en majorité des MELs-C représentés par la formule chimique 3. Pseudozyma tsukubaensis produit en majorité des MELs-B représentés par la formule chimique 4, et Pseudozyma crassa produit en majorité des MELs- A représentés par la formule chimique 4.

Avantageusement, les MELs sont obtenus par un procédé de fermentation mettant en oeuvre une souche produisant des MELs dont au moins 80%, préférentiellement au moins 85% en poids sont représentés par la formule chimique 3.

Plus particulièrement, les MELs sont obtenus par un procédé de fermentation mettant en oeuvre une souche choisie parmi Pseudozyma aphidis, Pseudozyma rugulosa, Pseudozyma antarctica ou Pseudozyma parantarctica, préférentiellement parmi Pseudozyma aphidis, Pseudozyma antarctica ou Pseudozyma parantarctica, plus préférentiellement, la souche est Pseudozyma aphidis.

Le substrat carboné est typiquement un glycérol, un n-alcane ou une huile, en particulier d'origine renouvelable.

Toute huile, composée de triglycérides et liquide à la température du procédé de fermentation, peut être utilisée comme substrat carboné.

Préférentiellement, l'huile renouvelable est une huile végétale ou animale, plus préférentiellement, une huile végétale. En particulier, l'huile végétale est choisie parmi le groupe constitué par une huile de soja, une huile de tournesol, une huile d'olive et une huile de colza. Plus particulièrement, l'huile végétale est une huile de soja ou une huile de colza, plus particulièrement encore, une huile de colza.

Ces huiles renouvelables sont particulièrement riches en groupes acyles comportant une chaine carbonée à 18 atomes de carbone, tels que les groupes acyles issus de l'acide oléique, linoléique et/ou linolénique.

Le procédé de fermentation dure généralement au moins 3 jours, préférentiellement au moins 7 jours.

Selon un mode de réalisation préférentiel, les MELs sont obtenus par un procédé de fermentation mettant en oeuvre :
- une souche du genre Pseudozyma, préférentiellement Pseudozyma antartica, Pseudozyma parantarctica, ou Pseudozyma aphidis,
- une huile végétale, préférentiellement une huile de colza ou une huile de soja, en tant que substrat carboné.

Une telle souche est usuellement cultivée en réacteur dans un milieu de culture comportant du glucose, de l'eau et/ou des sels (tel que le sulfate de magnésium, le phosphate de monopotassium, le nitrate de sodium, et/ou le nitrate d'ammonium). Ce milieu de culture est également mis en oeuvre dans le procédé de fermentation. En effet, d'une manière générale, le milieu de fermentation du procédé de fermentation, comporte un milieu de culture et le substrat carboné.

Avantageusement, les différents composants du milieu de fermentation (glucose et souche inclus) sont stérilisés séparément avant introduction dans le réacteur.

La température du milieu de fermentation est de préférence comprise entre 20°C et 40°C, plus préférentiellement entre 25°C et 35°C.

Le brut réactionnel obtenu à l'issue du procédé de fermentation, est ce qui est appelé dans la présente demande, le brut de fermentation.

Le brut de fermentation comporte généralement au moins deux MELs di-acylés, au moins du substrat carboné résiduel et/ou un sous-produit du substrat carboné, la souche et de l'eau, le sous-produit du substrat carboné résultant de la fermentation.

L'étape de récupération des MELs a pour objectif de séparer un/des MEL(s) d'un ou de plusieurs des autres composants du brut de fermentation, tels que du substrat carboné résiduel et/ou un sous-produit du substrat carboné, une souche, et/ou de l'eau.

Selon le mode de réalisation préférentiel ci-avant, le brut de fermentation comporte au moins deux MELs di-acylés, au moins un acide gras et/ou au moins un ester d'acide gras, de l'eau et une souche du genre Pseudozyma.

La séparation d'un ou des MEL(s) d'un ou de plusieurs des autres composants du brut de fermentation peut se faire par toute méthode de séparation connue de l'homme du métier.

Avantageusement, la séparation d'un ou des MEL(s) d'un ou de plusieurs des autres composants peut comprendre une ou plusieurs des méthodes suivantes :
- décantation,
- centrifugation,
- filtration,
- évaporation,
- extraction liquide/liquide,
- passage sur un substrat minéral ou une résine.

En particulier :
- la souche peut être séparée par décantation, filtration et/ou centrifugation ;
- l'eau peut être séparée par décantation, évaporation, centrifugation, et/ou passage sur un substrat minéral qui est un adsorbant;
- les acides gras et esters d'acides gras peuvent être séparés par extraction liquide/liquide et/ou par passage sur un substrat minéral ou une résine.

Les MELs récupérés et donc le au moins un MEL(s), peuvent donc comporter :
- au moins un acide gras et/ou au moins ester d'acide gras, et
- optionnellement, de l'eau.

Par « acide gras », on entend un acide gras libre et/ou sous forme de sel. La quantité d'acide(s) gras et/ou d'ester(s) d'acide(s) gras présente dans les MELs récupérés peut être comprise entre 0,5 et 60% en poids, de préférence entre 0,5 et 55% en poids, par rapport au poids total de MELs récupérés. Avantageusement, le ou les acide(s) gras comporte(nt) une chaine carbonée comportant entre 8 et 24 atomes de carbone, de préférence, entre 8 et 20 atomes de carbone.

Dans la présente demande, toutes les gammes de valeurs s'entendent bornes incluses.

Les MELs récupérés peuvent donc se trouver sous une forme plus ou moins purifiée, c'est-à-dire en mélange avec d'autres composants du milieu de fermentation.

Plus particulièrement, dans la présente demande, et en particulier dans les exemples, lorsque les MELs récupérés, sont en mélange avec au moins un acide gras et/ou au moins un ester d'acide gras, optionnellement de l'eau, ce mélange est appelé « mélange de MELs».

Un premier mélange de MELs est un brut de fermentation, c'est-à-dire au moins deux MELs di-acylés avec les autres composants du brut de fermentation.

Le brut de fermentation peut faire l'objet d'une ou plusieurs méthodes de séparation, conduisant à d'autres mélanges de MELs préférés présentant les caractéristiques suivantes :
- une quantité totale de MELs supérieure ou égale à 30% en poids, préférentiellement supérieure ou égale à 40% en poids;
- une quantité en autres composants (dont acide(s) gras, ester(s) d'acide(s) gras, et eau) inférieure ou égale à 70% en poids, préférentiellement inférieure ou égale à 60% en poids,
les pourcentages en poids étant donnés par rapport au poids du mélange de MELs.

Plus particulièrement, selon la ou les méthode(s) de séparation telle(s) que décrite(s) ci-avant, des mélanges de MELs plus ou moins concentrés en MELs peuvent être obtenus.

Selon un premier mode de réalisation, le mélange de MELs présente les caractéristiques suivantes :
- une quantité totale de MELs supérieure ou égale à 40% en poids, préférentiellement supérieure ou égale à 45% en poids ;
- une quantité en autres composants (dont acide(s) gras, ester(s) d'acide(s) gras et eau) inférieure ou égale à 60% en poids, préférentiellement inférieure ou égale à 55% en poids ;
les pourcentages en poids étant donnés par rapport au poids du mélange de MELs.

Avantageusement, dans ce premier mode de réalisation, la quantité d'eau est inférieure ou égale à 5% en poids, préférentiellement inférieure ou égale à 2% en poids, par rapport au poids du mélange de MELs.

Selon un deuxième mode de réalisation, le mélange de MELs présente les caractéristiques suivantes :
- une quantité totale de MELs supérieure ou égale à 90% en poids, préférentiellement supérieure ou égale à 95% en poids ;
- une quantité en autres composants (dont acide(s) gras, ester(s) d'acide(s) gras et eau) inférieure ou égale à 10% en poids, préférentiellement inférieure ou égale à 5% en poids;
les pourcentages en poids étant donnés par rapport au poids du mélange de MELs.

Avantageusement, dans ce deuxième mode de réalisation, la quantité d'eau est inférieure ou égale à 5% en poids, préférentiellement inférieure à 2% en poids, par rapport au poids du mélange de MELs.

Un tel mélange de MELs peut, par exemple, être obtenu à l'aide d'un procédé de fermentation tel que décrit ci-avant, comprenant plusieurs étapes de séparation telles que décrites ci-avant, ces étapes de séparation incluant préférentiellement une extraction liquide/liquide et/ou un passage sur un substrat minéral.

Le passage sur un substrat minéral peut être une chromatographie, telle qu'une chromatographie d'adsorption sur colonne de silice, réalisée à l'aide de solvants adaptés. De tels solvants sont connus de l'homme du métier.

Par « solvant », on entend un liquide dans les conditions normales de température et de pression (CNTP), qui a la propriété de dissoudre ou de diluer ou d'extraire d'autres substances sans provoquer de modification chimique de ces substances et sans lui-même se modifier.

Des exemples de mélanges de MELs et de leur procédé d'obtention sont également décrits dans la publication suivante : "Downstream processing of mannosylerythritol lipids produced by Pseudozyma aphidis" ; Rau et al.; European Journal of Lipids Science and Technology (2005), 107, 373-380. Avantageusement, au moins 80% en poids, préférentiellement au moins 85% en poids du/des MEL(s) récupéré(s) à l'issue du procédé de fermentation décrit ci-avant sont di-acylé(s).

Comme indiqué ci-avant, il existe plusieurs classes de MELs. Avantageusement, la combinaison selon l'invention comporte au moins deux MELs issus d'au moins deux classes de MELs différentes choisies parmi le groupe constitué par les MELs-A, MELs-B, MELs-C et MELs-D.

Selon un premier mode avantageux de réalisation, les MELs comportent des MELs-A, MELs-B, MELs-C et optionnellement des MELs-D, plus préférentiellement des MELs-A, MELs-B, MELs-C et des MELs-D. Avantageusement, les MELs comportent des MELs-A et MELs-B en une quantité totale comprise entre 50% à 95% en poids, de préférence 60% à 85% en poids, les pourcentages en poids étant indiqués par rapport au poids de la quantité totale de MELs.

Par « quantité totale », on entend la somme des quantités de chaque composé énuméré.

Avantageusement, les MELs comportent du ou des MELs-C en une quantité supérieure ou égale à 5% en poids, préférentiellement supérieure à 10% en poids, les pourcentages en poids étant indiqués par rapport au poids de la quantité totale de MELs.

Plus particulièrement, les MELs comportent des MELs-A et MELs-B en une quantité totale comprise entre 60% et 80% en poids et des MELs-C en une quantité supérieure ou égale à 15% en poids, les pourcentages en poids étant indiqués par rapport au poids de la quantité totale de MELs.

Selon un deuxième mode avantageux de réalisation, les MELs comportent des MELs-D en une quantité comprise entre 75% et 100% en poids, de préférence entre 90% et 100% en poids, les pourcentages en poids étant indiqués par rapport au poids de la quantité totale de MELs.

Les MELs-D peuvent être obtenus par désacétylation des MELs-A, MELs-B et MELs-C. Un exemple de réaction de désacétylation des MELs-A, MELs-B et MELs-C utilisant une enzyme hydrolysante est décrite dans la publication suivante : "Enzymatic synthesis of a novel glycolipid biosurfactant, mannosylerythritol lipid-D and its aqueous phase behavior " ; Fukuoka et al.; Carbohydrate Research (2011), 346, 266-271.

Le monolaurate de sorbitane polyéthoxylé (20), les lipides de mannosylérythritol et le monopropylène glycol ont l'avantage d'être non étiquetés (aucune phrase concernant d'éventuels risques n'est mentionnée sur les produits). La combinaison selon l'invention présente ainsi un bon profil écologique.

Comme expliqué ci-avant, par « quantité totale de monolaurate de sorbitane polyéthoxylé (20) et de lipide(s) de mannosylérythritol », on entend la somme de la quantité de monolaurate de sorbitane polyéthoxylé (20) et de la quantité totale de MEL(s).

Par « quantité totale de MEL(s) », on entend la quantité de molécule(s) de MEL(s) représentée(s) par la formule chimique 1 ou plus particulièrement représentée(s) par la formule chimique 2, présente dans la combinaison.

De préférence, la quantité totale de monolaurate de sorbitane polyéthoxylé (20) et de lipide(s) de mannosylérythritol est d'au moins 26% en poids, plus préférentiellement d'au moins 27% en poids par rapport au poids de la combinaison.

Avantageusement, dans la combinaison selon l'invention, la quantité de monopropylène glycol est d'au moins 50% en poids par rapport au poids de la combinaison.

De préférence, la quantité de monopropylène glycol est comprise entre 50% et 80% en poids, préférentiellement entre 50% et 75% en poids par rapport au poids de la combinaison.

La quantité totale de lipide(s) de mannosylérythritol dans la combinaison selon l'invention, est avantageusement d'au moins 1,1% en poids par rapport au poids de la combinaison.

Préférentiellement, la quantité totale de lipide(s) de mannosylérythritol dans la combinaison selon l'invention, est d'au moins 1,2% en poids par rapport au poids de la combinaison.

De préférence, la quantité totale de lipide(s) de mannosylérythritol est comprise entre 1 et 8% en poids, plus préférentiellement entre 1,1 et 5% en poids, plus préférentiellement encore, entre 1,1 et 4% en poids, par rapport au poids de la combinaison.

La quantité de monolaurate de sorbitane polyéthoxylé (20) dans la combinaison selon l'invention, est avantageusement d'au moins 20% en poids par rapport au poids de la combinaison.

Préférentiellement, la quantité de monolaurate de sorbitane polyéthoxylé (20) dans la combinaison selon l'invention, est d'au moins 22% en poids, plus préférentiellement au moins 24% en poids par rapport au poids de la combinaison.

De préférence, la quantité de monolaurate de sorbitane polyéthoxylé (20) est comprise entre 20 et 45% en poids, plus préférentiellement entre 22 et 40% en poids, plus préférentiellement encore, entre 24 et 38% en poids, par rapport au poids de la combinaison.

De préférence, le ratio en poids quantité totale de monolaurate de sorbitane polyéthoxylé (20) et de lipide(s) de mannosylérythritol / MPG est d'au moins 0,30, plus préférentiellement d'au moins 0,35, plus préférentiellement encore d'au moins 0,40.

La combinaison selon l'invention, lorsqu'elle est ajoutée à de l'eau, permet d'améliorer le pouvoir mouillant de cette eau et l'eau est particulièrement bien absorbée par le sol (tel qu'une surface solide de tourbe), sur lequel elle est appliquée.

L'effet de la combinaison selon l'invention sur la capacité d'une solution aqueuse à être absorbée par un sol est plus amplement décrit dans l'Exemple 2.

Une combinaison selon l'invention préférée comprend ou consiste en :
- au moins 22% en poids de monolaurate de sorbitane polyéthoxylé (20) ;
- au moins 1,1% en poids d'au moins un lipide de mannosylérythritol ;
- au moins 50% en poids de monopropylène glycol ; et
- optionnellement un acide gras et/ou un ester d'acide gras ;

dans laquelle la quantité totale de monolaurate de sorbitane polyéthoxylé (20) et de lipide(s) de mannosylérythritol est d'au moins 26% en poids ;
les pourcentages en poids étant donné par rapport au poids de la combinaison.

Une combinaison selon l'invention particulièrement préférée comprend ou consiste en :
- au moins 24% en poids de monolaurate de sorbitane polyéthoxylé (20) ;
- au moins 1,2% en poids d'au moins un lipide de mannosylérythritol ;
- au moins 50% en poids de monopropylène glycol ; et
- optionnellement un acide gras et/ou un ester d'acide gras ;

dans laquelle la quantité totale de monolaurate de sorbitane polyéthoxylé (20) et de lipide(s) de mannosylérythritol est d'au moins 27% en poids ;
les pourcentages en poids étant donné par rapport au poids de la combinaison.

L'invention concerne également un procédé de préparation d'une combinaison selon l'invention, comprenant une étape de mélangeage du monolaurate de sorbitane polyéthoxylé (20), d'au moins un lipide de mannosylérythritol, du monopropylène glycol, et optionnellement d'un acide gras et/ou d'un ester d'acide gras.

Le monolaurate de sorbitane polyéthoxylé (20), le au moins un lipide de mannosylérythritol, le monopropylène glycol, et l'acide gras et l'ester d'acide gras optionnels, utilisés dans le procédé présentent les caractéristiques préférentielles et avantageuses de ces composés telles qu'elles sont décrites ci-avant.

En particulier, la quantité totale de monolaurate de sorbitane polyéthoxylé (20) et de lipide(s) de mannosylérythritol est d'au moins 25% en poids, préférentiellement d'au moins 27% en poids par rapport au poids de la combinaison.

Cette étape de mélangeage se fait préférentiellement à température ambiante et à pression atmosphérique.

Alternativement, le monolaurate de sorbitane polyéthoxylé (20) et/ou le(s) lipide(s) de mannosylérythritol peut/peuvent préalablement être chauffé(s) à une température d'au moins 30°C, préférentiellement au moins 40°C. Le chauffage des composés permet une plus rapide homogénéisation de la combinaison selon l'invention.

L'invention vise également une solution comprenant une combinaison selon l'invention, et de l'eau.

Par « solution », dans la présente demande, on entend plus particulièrement une solution aqueuse, celle-ci pouvant être homogène ou non (par exemple, une émulsion, une dispersion ou une suspension).

La combinaison et leurs composés sont comme décrits précédemment, y inclus les modes avantageux et préférentiels.

De préférence, la quantité d'eau est d'au moins 50% en poids, plus préférentiellement, au moins 70% en poids par rapport au poids de la solution. Avantageusement, la quantité de combinaison selon l'invention est d'au moins 0,1% en poids par rapport au poids de la solution.

De préférence, la quantité de la combinaison selon l'invention dans la solution selon l'invention est d'au moins 0,3% en poids, plus préférentiellement d'au moins 0,5% en poids, plus préférentiellement encore, d'au moins 0,8% en poids par rapport au poids de la solution.

De préférence, la quantité de combinaison selon l'invention dans la solution selon l'invention est d'au plus de 15% en poids, plus préférentiellement d'au plus de 10% en poids, plus préférentiellement encore d'au plus de 5% en poids, par rapport au poids de la solution.

La solution selon l'invention peut comporter en outre, un biostimulant et/ou un principe actif pesticide.

Avantageusement la solution selon l'invention est donc une solution phytosanitaire.

Un biostimulant ou stimulateur de défense des plantes, est un fertilisant qui stimule les processus de nutrition des plantes indépendamment des éléments nutritifs qu'il contient, dans le seul but d'améliorer une ou plusieurs des caractéristiques suivantes des plantes :
- l'efficacité d'utilisation des éléments nutritifs,
- la tolérance au stress abiotique,
- les caractéristiques qualitatives de la plante cultivée.

Le biostimulant peut être choisi parmi:
- des substances issues du vivant, telles que des protéines, des peptides, des oligosaccharides et des acides aminés ;
- des substances de synthèse non xénobiotiques, telles que les tocophérols ;
- des substances organiques, telles que les acides humique et fulvique. L'homme du métier saura choisir le principe actif pesticide adapté à l'utilisation souhaitée.

Le principe actif pesticide est avantageusement choisi parmi les principes actifs herbicides, fongicides, insecticides, nématicides et/ou acaricides. Avantageusement, la solution selon l'invention comprend:
- un ou plusieurs principes actifs fongicides tel qu'un carboxamide, une strobilurine, un azole (triazole, imidazole), un composé hétérocyclique (pyridine, pyrimidine, pipérazine, morpholine), un carbamate, une huile essentielle (cinnamaldéhyde, thymol, huile de thé), un micro-organisme (champignons tels que *Gliocladium catenulatum* et *Trichoderma* spp, levures, bactéries telle que *Bacillus subtilis*), un polysaccharide (chitosan) et/ou,
- un ou plusieurs principes actifs herbicides tel qu'un inhibiteur de biosynthèse lipidique, un inhibiteur de l'acétolactase synthase (également appelé « inhibiteur d'ALS »), un inhibiteur de photosynthèse, un acétamide, un dérivé d'acides aminés tel qu'un dérivé organophosphoré d'acide aminé (glufosinate ou glyphosate) ou leurs sels (sels d'ammonium du glufosinate, sels de mono ou di ammonium, de potassium, d'isopropylamine du glyphosate), un aryloxyphénoxypropionate, le bipyridyl, le cyclohexanedione, une dinitroaniline, le diphényl éther, l'hydroxybenzonitrile, l'imidazolinone, un acide phénoxy acétique, la pyrazine, la pirydine, une sulfonylurée, une triazine, une urée, un carbamate, un acide gras comportant de 6 à 10 atomes de carbone (acide caprylique, acide pélargonique) ou ses dérivés (sels, savons) et/ou,
- un ou plusieurs principes actifs insecticides tel qu'un organo(thio)phosphate, un carbamate, un pyréthrinoïde, un régulateur de croissance des insectes, un agoniste/antagoniste des récepteurs nicotiniques, un antagoniste du GABA, une lactone macrocyclique, le géraniol, l'eugénol, le thymol, l'huile de neem, la 2-undecanone et/ou,
- un ou plusieurs principes actifs nématicides tel que le pélargonate de méthyle. En outre, on notera qu'un principe actif compris dans la solution selon l'invention peut avoir à la fois plusieurs des propriétés suivantes: herbicide, fongicide, insecticide, nématicide, acaricide et/ou stimulateur de défense des plantes.

De préférence, le principe actif pesticide est un principe actif herbicide, un principe actif fongicide, un principe actif insecticide et/ou un principe actif nématicide.

Avantageusement, le principe actif pesticide est d'origine renouvelable. De préférence, le principe actif pesticide est un principe actif de bio-contrôle.

Un principe actif de bio contrôle est également appelé principe actif biopesticide.

Avantageusement, la solution selon l'invention comprend:
- un ou plusieurs actif(s) biofongicide(s), tel qu'un microorganisme (champignons tels que *Gliocladium catenulatum* et *Trichoderma* spp, levures, bactéries telle que *Bacillus subtilis*) et/ou,
- un ou plusieurs actif(s) bioherbicide(s), tel qu'un acide gras comportant de 6 à 10 atomes de carbone (acide caprylique, acide pélargonique) ou ses dérivés (sels, savons) et/ou,
- un ou plusieurs actif(s) bionématicide(s) tel que le pélargonate de méthyle et/ou,
- un ou plusieurs actif(s) bioinsecticide(s), tel que la 2-undecanone.

De préférence, la quantité totale de principe(s) actif(s) pesticide(s) et/ou de biostimulant est comprise entre 0,1 et 30% en poids, de préférence entre 1 et 20% en poids, plus préférentiellement entre 5 et 15% en poids par rapport au poids total de la solution selon l'invention.

Par « quantité totale de principe(s) actif(s) pesticide(s) et/ou de biostimulant », on entend la quantité totale de molécules de l'ensemble de(s) principe(s) actif(s) pesticide(s) et biostimulant(s) présent(s) dans la solution selon l'invention.

L'invention vise également un procédé de préparation d'une solution selon l'invention, comprenant une étape de mélangeage d'une combinaison selon l'invention, avec de l'eau, et optionnellement un biostimulant et/ou un principe actif pesticide.

Les solutions selon l'invention sont facilement préparables par simple mélangeage à température ambiante.

La combinaison selon l'invention et ses composés sont comme décrits précédemment, y inclus les modes avantageux et préférentiels.

L'invention concerne par ailleurs l'utilisation d'une combinaison selon l'invention, en tant qu'agent mouillant pour sol.

La combinaison selon l'invention améliore en effet l'absorption d'eau par le sol. L'invention vise également un procédé d'amélioration de l'absorption d'eau par un sol, en particulier de façon durable dans le temps, comprenant une étape de mise en contact du sol avec une solution aqueuse comprenant une combinaison selon l'invention.

Comme décrit précédemment, une solution selon l'invention comprenant une combinaison selon l'invention a un pouvoir mouillant pour sol très amélioré. L'eau additivée par la combinaison selon l'invention est non seulement mieux absorbée par le sol, c'est-à-dire que l'eau est absorbée en plus grande quantité qu'une eau non additivée de la combinaison selon l'invention, mais par la suite, l'eau est plus facilement absorbée par le sol lors des irrigations suivantes. Il n'est en effet pas nécessaire que l'eau soit additivée par la combinaison à chaque irrigation. L'effet mouillant reste efficace lors des au moins 3, préférentiellement au moins 5, plus préférentiellement au moins 9 irrigations suivantes du sol par de l'eau non additivée de la combinaison selon l'invention, les irrigations pouvant être espacées de périodes de sécheresse.

L'invention concerne donc en outre l'utilisation d'une solution selon l'invention, dans l'irrigation d'un sol.

L'effet de la combinaison selon l'invention étant durable, il n'est pas nécessaire d'ajouter la combinaison dans l'eau lors de chaque irrigation du sol.

L'invention concerne donc également un procédé d'irrigation d'un sol comprenant une étape d'irrigation du sol avec une solution aqueuse comprenant la combinaison selon l'invention, et au moins 1 étape subséquente d'irrigation du sol avec une solution aqueuse ne comprenant pas la combinaison selon l'invention.

De préférence, le procédé d'irrigation d'un sol comprend au moins 3, plus préférentiellement au moins 5 étapes subséquentes.

L'irrigation peut se faire par écoulement de surface ou par propulsion en l'air sous forme de gouttelettes.

Dans les utilisations et procédés selon l'invention, la combinaison, la solution et leurs composés sont comme décrits précédemment, y inclus les modes avantageux et préférentiels.

### Exemples

### Exemple 1 : Préparation de combinaisons selon l'invention

### 1. Obtention de MELs

Les MELs ont été obtenus par un procédé de fermentation comprenant les étapes suivantes :
- la conversion d'un substrat carboné tel qu'une huile végétale (colza) par une souche de levure telle que *Pseudozyma aphidis* pour obtenir les MELs; et
- la récupération des MELs ainsi obtenus.

L'étape de récupération des MELs a consisté en la séparation des MELs des autres constituants par filtration, centrifugation, extraction liquide/liquide et évaporation.

A l'issue de ces diverses étapes de séparation, un premier mélange comportant des MELs (appelé « mélange de MELs » 1A) a été récupéré, qui présente les caractéristiques suivantes :
- quantité totale de MELs de 48% en poids (dont 42% en poids de MELs diacylés et 6% en poids de MELs triacylés);
- quantité en autres composants : 52% en poids (dont 38% en poids d'esters d'acides gras et 13% en poids d'acides gras) ;
les pourcentages en poids étant donnés par rapport au poids total du mélange de MELs 1A récupéré.

Une étape de séparation supplémentaire appliquée au mélange de MELs 1A a ensuite été réalisée par chromatographie d'adsorption sur colonne de silice. Un second mélange de MELs (appelé « mélange de MELs » 1B) a ainsi été récupéré, qui présente les caractéristiques suivantes :
- quantité totale de MELs de 95% en poids (dont 100% en poids de MELs diacylés);
- quantité en autres composants : 5% en poids (dont 3% en poids d'acides gras et 0,5% en esters d'acides gras) ;
les pourcentages en poids étant donnés par rapport au poids total du mélange de MELs 1B récupéré.

### 2. Produits utilisés

- Monolaurate de sorbitane polyéthoxylé (20) (LSOE20), (Radiasurf 7137, Oleon) ;
- Lipides de mannosylérythritol (MELs) :
   - mélange de MELs 1A ;
   - mélange de MELs 1B ;
- Monopropylène glycol (MPG) (Radianol 4713, Oleon) ;
- Acides gras de colza (AG colza) (Radiacid 0166, Oleon).

### 3. Préparations de combinaisons selon l'invention

Les combinaisons 1 et 2 selon l'invention ont été préparées en mélangeant, à température ambiante, dans un flacon en verre, le monolaurate de sorbitane polyéthoxylé (20), le mélange de MELs 1B, et le monopropylène glycol. Les combinaisons selon l'invention ainsi obtenues sont liquides, homogènes et transparentes.

Les combinaisons 3 à 6 selon l'invention ont été préparées en mélangeant les différents composés comme décrit précédemment, en utilisant le mélange de MELs 1A. La présence d'esters d'acides gras dans ce mélange de MELs a nécessité l'ajout d'acides gras pour obtenir des combinaisons limpides. Cet ajout d'acides gras n'a pas d'incidence sur l'effet technique de la combinaison selon l'invention comme le montrent les résultats similaires obtenus à l'Exemple 2 point 3.2, avec les solutions 1 et 2 comprenant respectivement la combinaison 1 et 2.

Les quantités, exprimées en pourcentage en poids sur le poids total de la combinaison, de chaque composé des combinaisons sont indiquées dans le Tableau 1 ci-après :

**[Table 1]**

| | LSOE20 (%) | MELs 1B (%) | MELs 1A (%) | AG colza (%) | MPG (%) |
|---|---|---|---|---|---|
| Combinaison 1 | 29 | 2,5 | - | - | 68,5 |
| Combinaison 2 | 29 | 2,5 | - | 4 | 64,5 |
| Combinaison 3 | 29 | - | 5 | 3 | 63 |
| Combinaison 4 | 24 | - | 7,68 | 5,12 | 63,2 |
| Combinaison 5 | 34 | - | 7,68 | 5,12 | 53,2 |
| Combinaison 6 | 29 | - | 2,88 | 1,92 | 66,2 |

### Exemple 2 : Evaluation du pouvoir mouillant pour sol des solutions selon l'invention

### 1. Préparation de solutions selon l'invention

Les solutions 1-6 selon l'invention ont été préparées en introduisant dans un bécher de 2 L, 1980 g d'eau du robinet et respectivement 20 g d'une combinaison 1-6 selon l'invention préparée à l'Exemple 1. Chaque solution est mélangée, à l'aide d'une agitation magnétique, pendant 1 min à 400 tr/min afin d'obtenir une dispersion homogène de la combinaison dans l'eau. Les solutions sont stables : la dispersion de la combinaison dans l'eau reste homogène sans aucun dépôt après 8 heures à température ambiante.

Les solutions 1-6 contiennent respectivement 1% en poids d'une combinaison 1-6.

### 2. Préparation de solutions de référence 1-4

La solution de référence 1 contient 500 g d'eau du robinet.

La solution de référence 2 contient 0,92% en poids de MPG dans 99,08% d'eau du robinet.

La solution de référence 3 contient 1% en poids d'un mélange constitué de 29% en poids de LSOE20 et 71% en poids de MPG, dans 99% d'eau du robinet.

La solution de référence 4 contient 1% en poids d'un mélange constitué de 5% en poids de MELs 1A, 3% en poids d'AG colza et 92% en poids de MPG, dans 99% d'eau du robinet.

### 3. Evaluation du pouvoir mouillant pour sol des solutions selon l'invention

### 3.1 Matériel

Outre les solutions préparées précédemment, des pastilles de tourbes (Jilly-7^{®} de Jiffy) composées de tourbe et maintenues par un filet en fibre de coco laissant circuler l'air et l'eau, ont été utilisées.

La hauteur d'une pastille sèche est de 0,8 cm et son diamètre est de 41 mm.

### 3.1.1 Test d'hydrophobicité des pastilles de tourbe

L'hydrophobicité des pastilles a été évaluée en mesurant le temps de pénétration d'une goutte d'eau (« Water Drop Pénétration Time », WDPT) : une goutte d'eau du robinet de 10 µL, prélevée à l'aide d'une micropipette VWR (0,5-10 µL) a été déposée à la surface d'une pastille. Le chronomètre a été déclenché au même moment et arrêté lorsque la goutte n'était plus visible à la surface de la pastille, dans le cas présent au bout de 150 s, correspondant à un sol fortement hydrophobe.

La publication « Water Repellency of Sieve Fractions from Sandy Soils and Relationships with Organic Material and Soil Structure », Bisdom et al, Geoderma (1993), 56, 105-118, décrit les classifications d'un sol selon le temps de pénétration d'une goutte d'eau. Ainsi, cinq classes de sol sont distinguées : mouillable ou non hydrophobe (WDPT < 5 s), légèrement hydrophobe (WDPT = 5-60 s), fortement hydrophobe (WDPT = 60-600 s), très fortement hydrophobe (WDPT = 600-3600 s), extrêmement hydrophobe (WDPT > 3600 s).

### 3.2 Tests par immersion

Pour évaluer le pouvoir mouillant pour sol des solutions selon l'invention et des solutions de référence, des tests par immersion de pastilles de tourbe ont été réalisés.

### Etape 1 : irrigation de la tourbe avec une solution

500 g d'une solution ont été pesés dans un bécher de 1L posé sur une balance (Mettler Toledo XS4002S). Une écumoire a ensuite été placée dans ce bécher et la balance tarée (remise à zéro). Une pastille de tourbe a alors été déposée à la main à la surface de la solution. Après 3 minutes, la pastille a été retirée à l'aide de l'écumoire, qui a été suspendue pendant 10 secondes au-dessus du bécher afin que l'eau non absorbée s'égoutte. La pastille de tourbe a ensuite été déposée sur un verre de montre et l'écumoire a été replacée dans le bécher. La masse affichée par la balance correspond donc à la masse d'eau absorbée dans la pastille de tourbe.

### Etape 2 : assèchement de la tourbe

Pour simuler l'assèchement du sol entre deux irrigations, la pastille, après 1h de repos à température ambiante, a été disposée dans une étuve à 60°C pendant 20h.

### Etape 3 : nouvelle irrigation avec de l'eau non additivée d'une combinaison selon l'invention ou de tout autre composé

500 g d'eau du robinet ont été pesés dans un bécher de 1L posé sur une balance (Mettler Toledo XS4002S). Une écumoire a ensuite été placée dans ce bécher et la balance tarée (remise à zéro).

Après 1h de repos à température ambiante à la sortie de l'étuve, la pastille a alors été déposée à la main à la surface de l'eau pendant 3 min et la masse d'eau absorbée a été déterminée comme décrit précédemment à l'étape 1.

Les étapes 2 et 3 ont été répétées 9 fois afin de décrire 9 irrigations réalisées à la suite de la première irrigation avec une solution selon l'invention (étape 1). Lorsque la tourbe a été immergée dans une solution de référence lors de la 1^{ère} étape, les étapes 2 et 3 n'ont été répétées que 5 fois, la masse d'eau absorbée ayant déjà été divisée par deux entre la 1^{ère} et la 2^{ème} immersion dans l'eau non additivée.

Pour chaque solution testée, le test a été réalisé trois fois. Les quantités d'eau absorbée en 3 min, exprimées en g, données dans le Tableau 2 et le Tableau 3 correspondent à la moyenne des résultats des trois tests.

Remarque : le volume d'eau absorbé lors de la 1^{ère} immersion est inférieur aux volumes suivants, car en 3 minutes la tourbe n'a pas fini de se dilater et cette dilatation se poursuit pendant le temps de repos. Aussi, pour les immersions qui suivent, la pastille est complètement dilatée et les 3 minutes suffisent alors à la pastille pour absorber un volume d'eau maximal.

**[Table 2]**

| | Immersions dans l'eau | | | | | | | | | |
|---|---|---|---|---|---|---|---|---|---|---|
| | 1 | 2 | 3 | 4 | 5 | 6 | 7 | 8 | 9 | 10 |
| Solution 1 | 17,5 | 36,5 | 39,7 | 36,3 | 39,3 | 39,8 | 38,1 | 39,1 | 39,4 | 39,7 |
| Solution 2 | 16,8 | 33,6 | 36,9 | 35,9 | 39,0 | 35,0 | 36,8 | 35,4 | 36,5 | 37,5 |
| Solution 3 | 19,1 | 40,1 | 40,7 | 35,2 | 34,2 | 35,2 | 41,4 | 40,2 | 40,2 | 39,0 |
| Solution 4 | 22,9 | 41,5 | 41,0 | 41,6 | 41,5 | 38,5 | 40,0 | 41,0 | 37,1 | 39,1 |
| Solution 5 | 29,6 | 40,7 | 41,4 | 41,5 | 39,0 | 40,0 | 39,1 | 39,7 | 39,2 | 39,8 |
| Solution 6 | 21,6 | 37,2 | 36,7 | 39,0 | 36,9 | 38,8 | 37,7 | 36,5 | 39,4 | 40,1 |

**[Table 3]**

| | Immersions dans l'eau | | | | | |
|---|---|---|---|---|---|---|
| | 1 | 2 | 3 | 4 | 5 | 6 |
| Solution de référence 1 | 2,3 | 1,1 | 0,6 | 0 | - | - |
| Solution de référence 2 | 7,6 | 8,7 | 4,0 | 2,2 | - | - |
| Solution de référence 3 | 16,7 | 30,9 | 23,6 | 15,5 | 11,3 | 8,6 |
| Solution de référence 4 | 9,9 | 20,3 | 10,0 | 5,7 | 5,6 | 1,7 |

Les tourbes ayant été en contact avec une solution selon l'invention, absorbent de plus grandes quantités d'eau que les tourbes jamais mises en contact avec une combinaison selon l'invention. De plus, lors des immersions 2 à 10, correspondant à une mise en contact des tourbes sèches avec de l'eau non additivée, l'absorption d'eau se fait en des quantités équivalentes, ce qui montre la durabilité de l'effet mouillant après une mise en contact de la combinaison selon l'invention avec la tourbe lors de la 1^{ère} immersion.

Les combinaisons selon l'invention peuvent donc être utilisées en tant qu'agent mouillant pour sol avec effet durable.

L'eau seule (solution de référence 1) n'est que très faiblement absorbée par la tourbe sèche.

On peut également observer que le MPG seul (solution de référence 2), et que 5% de mélange de MELs A1 dans de l'acide gras et du MPG (solution de référence 4), ne permettent pas à l'eau de s'absorber en grande quantité dans une tourbe sèche.

Le monolaurate de sorbitane polyéthoxylé (20) dans du MPG (solution de référence 3) facilite l'absorption d'eau lors de la 1^{ère} irrigation additivée et lors de l'irrigation suivante non additivée, les quantités d'eau absorbées étant toutefois moins importantes que les quantités d'eau absorbées lors d'immersions dans les solutions selon l'invention. Il n'y a en revanche pas d'effet durable, la masse d'eau absorbée lors de la 4^{ème} immersion représente environ la moitié de la masse d'eau absorbée lors de la 2ème irrigation.

### Exemple 3 : Exemple comparatif

### 1. Préparation d'une combinaison comparative

La combinaison comparative 1 été préparée selon la méthode décrite à l'Exemple 1 point 3, en utilisant 20% en poids de monolaurate de sorbitane polyéthoxylé (20), 2,88% en poids de MELs 1A, 1,92% en poids d'acides gras de colza et 79,2% en poids de monopropylène glycol.

La combinaison comparative contient donc une quantité totale de monolaurate de sorbitane polyéthoxylé (20) et de lipide(s) de mannosylérythritol, inférieure à 25% en poids par rapport au poids de la combinaison.

### 2. Préparation d'une solution comparative

La solution comparative 1 a été préparée selon la méthode décrite à l'Exemple 2 point 1, en utilisant 20 g en poids de la combinaison comparative 1 dans 1980 g d'eau du robinet.

La solution comparative 1 contient 1% en poids de la combinaison comparative 1.

### 3. Evaluation du pouvoir mouillant pour sol de la solution comparative

Le pouvoir mouillant pour sol a été évalué en soumettant la solution comparative 1 au test d'irrigation selon la méthode décrite à l'Exemple 2 point 3.2.

Le test a été réalisé trois fois et les quantités d'eau absorbée en 3 min, exprimées en g, données dans le Tableau 4 correspondent à la moyenne des résultats des trois tests.

**[Table 4]**

| | Immersions dans l'eau | | | | |
|---|---|---|---|---|---|
| | 1 | 2 | 3 | 4 | 5 |
| Solution comparative 1 | 14,9 | 16,3 | 9,8 | 3,8 | 0 |

On peut observer que la solution comparative 1 permet à l'eau additivée de la combinaison comparative 1 de s'absorber dans une tourbe sèche, mais n'a pas d'effet durable. En effet, lors de de la 2^{ème} immersion dans de l'eau alors non additivée, une quantité moindre, au moins divisée par 2, est absorbée par la tourbe, par rapport à la quantité d'eau absorbée lors d'une 2^{ème} immersion faisant suite à une 1^{ère} immersion dans de l'eau additivée d'une combinaison selon l'invention, telle que la combinaison 6, comportant la même quantité totale de MELs mais une quantité totale de LSOE20 et de MELs supérieure à 25% en poids par rapport au poids de la combinaison. Lors de la 4ème immersion, la tourbe n'absorbe quasi plus d'eau et plus du tout à la 5^{ème} immersion.

La combinaison comparative 1 ne peut donc pas être utilisée en tant qu'agent mouillant pour sol avec effet durable.

## Revendications

1. Combinaison comprenant ou consistant en :
- du monolaurate de sorbitane polyéthoxylé (20);
- au moins 1% en poids d'au moins un lipide de mannosylérythritol ;
- du monopropylène glycol ; et
- optionnellement un acide gras et/ou un ester d'acide gras ;
dans laquelle la quantité totale de monolaurate de sorbitane polyéthoxylé (20) et de lipide(s) de mannosylérythritol est d'au moins 25% en poids ;
les pourcentages en poids étant donné par rapport au poids de la combinaison.

2. Combinaison selon la revendication 1, dans laquelle la quantité de monopropylène glycol est d'au moins 50% en poids par rapport au poids de la combinaison.

3. Combinaison selon la revendication 1 ou 2, dans laquelle la quantité de monolaurate de sorbitane polyéthoxylé (20) est d'au moins 20% en poids par rapport au poids de la combinaison.

4. Procédé de préparation d'une combinaison selon l'une quelconque des revendications 1 à 3, comprenant une étape de mélangeage du monolaurate de sorbitane polyéthoxylé (20), d'au moins un lipide de mannosylérythritol, du monopropylène glycol, et optionnellement d'un acide gras et/ou d'un ester d'acide gras.

5. Solution comprenant une combinaison selon l'une quelconque des revendications 1 à 3, et de l'eau.

6. Solution selon la revendication 5, dans laquelle la quantité de combinaison selon l'une quelconque des revendications 1 à 3, est d'au moins 0,1% en poids par rapport au poids de la solution.

7. Solution selon la revendication 5 ou 6, comprenant en outre un biostimulant et/ou un principe actif pesticide.

8. Procédé de préparation d'une solution selon l'une quelconque des revendications 5 à 7, comprenant une étape de mélangeage d'une combinaison selon l'une quelconque des revendications 1 à 3, avec de l'eau, et optionnellement un biostimulant et/ou un principe actif pesticide.

9. Utilisation d'une combinaison selon l'une quelconque des revendications 1 à 3, en tant qu'agent mouillant pour sol.

10. Utilisation d'une solution selon l'une quelconque des revendications 5 à 7, dans l'irrigation d'un sol.

## Patentansprüche

1. Kombination, umfassend oder bestehend aus:
- polyethoxyliertes Sorbitanmonolaurat (20);
- mindestens 1 Gew.-% mindestens eines Mannosylerythritlipids;
- Monopropylenglykol; und
- optional eine Fettsäure und/oder einen Fettsäureester;
wobei die Gesamtmenge an polyethoxyliertem Sorbitanmonolaurat (20) und Mannosylerythritlipid(en) mindestens 25 Gew.-% beträgt;
wobei die Gewichtsprozente in Bezug auf das Gewicht der Kombination angegeben sind.

2. Kombination nach Anspruch 1, wobei die Menge an Monopropylenglykol mindestens 50 Gew.-%, bezogen auf das Gewicht der Kombination, beträgt.

3. Kombination nach Anspruch 1 oder 2, wobei die Menge an polyethoxyliertem Sorbitanmonolaurat (20) mindestens 20 Gew.-%, bezogen auf das Gewicht der Kombination, beträgt.

4. Verfahren zur Herstellung einer Kombination nach einem der Ansprüche 1 bis 3, umfassend einen Schritt des Mischens von polyethoxyliertem Sorbitanmonolaurat (20), mindestens einem Mannosylerythrit-Lipid, Monopropylenglycol und optional einer Fettsäure und/oder einem Fettsäureester.

5. Lösung, die eine Kombination nach einem der Ansprüche 1 bis 3 und Wasser umfasst.

6. Lösung nach Anspruch 5, wobei die Menge der Kombination nach einem der Ansprüche 1 bis 3 mindestens 0,1 Gew.-%, bezogen auf das Gewicht der Lösung, beträgt.

7. Lösung nach Anspruch 5 oder 6, ferner umfassend ein Biostimulans und/oder einen Pestizidwirkstoff.

8. Verfahren zur Herstellung einer Lösung nach einem der Ansprüche 5 bis 7, umfassend einen Schritt des Mischens einer Kombination nach einem der Ansprüche 1 bis 3 mit Wasser und optional einem Biostimulans und/oder einem pestiziden Wirkstoff.

9. Verwendung einer Kombination nach einem der Ansprüche 1 bis 3 als Bodennetzmittel.

10. Verwendung einer Lösung nach einem der Ansprüche 5 bis 7 bei der Bewässerung eines Bodens.

## Claims

1. A combination comprising or consisting of:
- polyethoxylated sorbitan monolaurate (20);
- at least 1% by weight of at least one mannosylerythritol lipid;
- monopropylene glycol; and
- optionally a fatty acid and/or a fatty acid ester;
wherein the total amount of polyethoxylated sorbitan monolaurate (20) and mannosylerythritol lipid(s) is at least 25% by weight,
the weight percentages being relative to the weight of the combination.

2. The combination according to claim 1, wherein the amount of monopropylene glycol is at least 50% by weight relative to the weight of the combination.

3. The combination according to claim 1 or 2, wherein the amount of polyethoxylated sorbitan monolaurate (20) is at least 20% by weight relative to the weight of the combination.

4. A method for preparing a combination according to any one of claims 1 to 3, comprising a step of mixing the polyethoxylated sorbitan monolaurate (20), at least one mannosylerythritol lipid, monopropylene glycol, and optionally a fatty acid and/or a fatty acid ester.

5. A solution comprising a combination according to any one of claims 1 to 3, and water.

6. The solution according to claim 5, wherein the amount of combination according to any one of claims 1 to 3, is at least 0.1% by weight relative to the weight of the solution.

7. The solution according to claim 5 or 6, further comprising a biostimulant and/or a pesticidal active ingredient.

8. A method for preparing a solution according to any one of claims 5 to 7, comprising a step of mixing a combination according to any one of claims 1 to 3, with water, and optionally a biostimulant and/or a pesticidal active ingredient.

9. A use of a combination according to any one of claims 1 to 3, as a wetting agent for soil.

10. The use of a solution according to any one of claims 5 to 7, in the irrigation of a soil.
